# NEUE EUROPÄISCHE PATENTSCHRIFT

(11) **EP 0 799 876 B2**
(45) Veröffentlichungstag und Bekanntmachung des Hinweises auf die Entscheidung über den Einspruch: **15.11.2006**
(45) Hinweis auf die Patenterteilung: 02.07.2003
(21) Anmeldenummer: 97105334.3
(22) Anmeldetag: 29.03.1997
(51) Int. Cl.: C09J 131/02, C09J 133/04, C09J 125/14

(54) **Pulverförmige Klebstoffzusammensetzung**
Powdery adhesive composition
Composition d'adhésif à poudre

(30) Priorität: 06.04.1996 DE 19613931
(43) Veröffentlichungstag der Anmeldung: 08.10.1997
(73) Patentinhaber: Elotex AG, 6203 Sempach Station (CH)
(72) Erfinder: Geissler, Ulrich, Dr., 65329 Hochheim (DE); Hintz, Helmut, 61184 Karben (DE); Vogt-Saggau, Ulrike, Dr., 64625 Bensheim (DE)
(74) Vertreter: Ackermann, Joachim

(56) Entgegenhaltungen:
- WO-A-97/26295
- WO-A-97/26307
- DE-A- 19 601 699
- GB-A- 1 223 413

## Beschreibung

Die vorliegende Erfindung betrifft pulverförmige Klebstoffzusammensetzungen, Verfahren zu deren Herstellung sowie deren Verwendung in Formulierungen zum Verkleben von porösen und semiporösen Substraten.

Zur Vermeidung von Lösemittelabfällen und -emissionen werden gemäß TRGS 610/GISCODE in zunehmendem Maße wäßrige Dispersionen als Bindemittel zur Herstellung schadstofffreier Klebstoffe eingesetzt. Geeignete wäßrige Dispersionen, wie sie beispielsweise in US-A 4 654 388, DE-A 23 01 497 und den EP-A 0 221 461, EP-A 0 315 070, EP-A 0 490 191 sowie EP-A 0.620 243 beschrieben sind, enthalten neben einem synthetischen, radikalisch polymerisierten Polymeren üblicherweise noch klebrigmachende Harze, sogenannte Tackifier.

Bei diesen Harzen handelt es sich im allgemeinen um Kolophoniumharze oder deren Ester, sowie Kohlenwasserstoffharze, die gegebenenfalls verestert oder noch modifiziert sein können. Auch wäßrige Harzdispersionen mit Harzanteilen zwischen 50 und 70 Gew.-% finden als Tackifier ihren Einsatz. Das klebrigmachende Harz wird in der Regel in Form einer organischen Lösung oder auch als Harzschmelze zu der wäßrigen Dispersion.des Polymeren gegeben, oder aber in Kombination mit einem Netzmittel, Weichmacher oder Hochsieder der Dispersion zugesetzt. Bei Verwendung wäßriger Harzdispersionen ist lediglich eine einfache Kombination mit einer als Bindemittel geeigneten Kunststoffdispersion notwendig. Da wäßrige Produkte einen guten Nährboden für Mikroorganismen bilden, werden sie in der Regel konserviert. Als Konservierungsmittel werden beispielsweise Chloracetamid, N-Methylolchloracetamid, 2-Brom-2-nitropropan-1,3-diol oder lsothiazolinone eingesetzt.

In EP-A 0 134 451 sind Dispersionspulver beschrieben, die auch zur Herstellung von Klebstoffen eingesetzt werden können, selbst aber keinen ausreichenden Tack besitzen.

Aufgabe der vorliegenden Erfindung war die Bereitstellung eines Klebstoffs, der einen hohen Tack bei ausreichender Lagerstabilität und Frostbeständigkeit bietet und außerdem keinen Zusatz von gesundheitsbedenklichen Konservierungsmitteln benötigt.

Die Aufgabe wurde gelöst durch herstellung einer pulverförmigen Klebstoffzusammensetzung, die ein Polymerisat und ein klebrigmachendes Harz enthält.

Gegenstand der Erfindung ist eine pulverförmige, in Wasser redispergierbare Klebstoffzusammensetzung, enthaltend
(a) mindestens ein Polymerisat aus der Gruppe der Vinylester-Polymerisate, (Meth)acrylat-Polymerisate und Styrol-(Meth)acrylat-Polymerisate,
(b) mindestens ein klebrigmachendes Harz (Tackifier)
(c) ein oder mehrere Schutzkolloide gemäss Anspruch 1 in einer Menge von 5 bis 50 Gew.-%
   und gegebenenfalls
(d) ein oder mehrere Antibackmittel.

Geeignete Vinylester-Polymerisate (a) sind insbesondere Vinylacetat-Homopolymere oder Copolymere des Vinylacetats mit Ethylen und/oder weiteren Vinylestern, vorzugsweise Vinylpropionat, Vinylpivalat, Vinylestern von ^{®}Versatic-Säure 9, 10 oder 11 (Shell-Chemie), Vinyl-2-ethylhexanoat und/oder Estern der Acrylsäure und/oder Methacrylsäure mit geradkettigen, verzweigten oder cyclischen Alkoholen mit 1 bis 22 Kohlenstoffatomen.

Die (Meth)acrylat- und Styrol-(Meth)acrylat-Polymerisate (a) leiten sich von Polymerisaten aus Styrol und/oder Estern, der Acrylsäure und/oder Methacrylsäure mit geradkettigen, verzweigten oder cyclischen aliphatischen Alkoholen mit 1 bis 22 Kohlenstoffatomen, vorzugsweise Methylmethacrylat, Ethylacrylat, n-Butylacrylat, n-Butylmethacrylat, 2-Ethylhexylacrylat, ab.

Als klebrigmachende Harze (Tackifier) (b) werden vorzugsweise Kolophoniumharze, insbesondere Balsamharze, Tallharze, Wurzelharze, oder Kohlenwasserstoffharze, insbesondere Terpenharze, Cumaron-Inden-Harze, eingesetzt, die gegebenenfalls noch modifiziert sein können, vorzugsweise durch Veresterung mit mehrwertigen Alkoholen, beispielsweise Ethylenglykol, Glycerin oder Pentaerythrit. Die klebrigmachenden Harze (b) werden vorzugsweise in Mengen von 50 bis 300 Gew.-%, insbesondere 70 bis 200 Gew.-%, besonders bevorzugt 90 bis 150 Gew.-%, bezogen auf (a), eingesetzt.

Geeignete Schutzkolloide (c) sind vorzugsweise Polyvinylalkohole, veretherte Cellulosederivate, beispielsweise Hydroxyethylcellulose, Methylcellulose, Carboxymethylcellulose, wasserlösliche oder durch Hydrolyse abgebaute Stärken, Ligninsulfonat, Poly(meth)acrylamid, Polyvinylsulfonsäuren, Polyvinylpyrrolidon, sowie deren Gemische, insbesondere Polyvinylalkohol mit einem Hydrolysegrad von 70 bis 100mol-%.

Die Schutzkolloide (c) werden in Mengen von 5 bis 50 Gew.-%, insbesondere 10 bis 40 Gew.-%, bezogen auf die Gesamtmenge von Polymerisat (a) und klebrigmachenden Harzen (b), eingesetzt.

Zusätzlich können noch Emulgatoren, bevorzugt vom nichtionischen Typ, beispielsweise Ethoxylierungsprodukte von Propylenoxid, Alkylpolyglykolether, vorzugsweise Ethoxylierungsprdoukte von Lauryl-, Oleyl-, Stearyl- oder Kokosfettalkohol, sowie Alkylphenolpolyglykolether, vorzugsweise Ethoxylierungsprodukte von Octyl- oder Nonylphenol, Düsopropylphenol, Triisopropylphenol oder von Di- oder Tri-tert.-butylphenol eingesetzt werden.

Geeignete Antibackmittel (d) sind vorzugsweise Quarz, Kieselsäuren, Silikate, beispielsweise Talk, Glimmer, Chlorit, Aluminiumsilikat oder Carbonate, beispielsweise Dolomit, Calciumcarbonat, oder Gemische derselben. Besonders geeignet sind Stoffe mit mittleren Teilchengrößen von 0,1 bis 100 um in Mengen von 0 bis 40 Gew.-%, vorzugsweise 5 bis 25 Gew.-%, bezogen auf Gesamtfeststoffgehalt.

Ein weiterer Gegenstand der Erfindung ist ein Verfahren zur Herstellung der pulverförmigen Klebstoffzusammensetzung nach Anspruch 1 durch Trocknen der zugrunde liegenden Dispersion aus Polymerisat (a), klebrigmachendem Harz (b), Schutzkolloid (c) und gegebenenfalls Antibackmittel (d).

Die Herstellung des Polymerisats (a) erfolgt nach allgemein bekannten Methoden, vorzugsweise durch Emulsionspolymerisation der entsprechenden Monomere mittels eines Radikalstarters.

Die Herstellung von veresterten Harzen (b) erfolgt nach bekannten Veresterungsmethoden.

Die Herstellung der pulverförmigen Klebstoffzusammensetzung, bestehend aus (a), (b), (c) und gegebenenfalls (d), erfolgt mittels Sprühtrocknung der Kunststoffdispersion in üblichen Sprühtrocknungsanlagen, wobei die Zerstäubung mittels Mehrstoffdüsen oder mit einer rotierenden Scheibe erfolgen kann. Die Austrittstemperatur im Sprühtrockner liegt vorzugsweise im Bereich von 50 bis 80 °C. Während der Trocknung werden gegebenenfalls ein oder mehrere Antibackmittel (d) zugegeben.

Die pulverförmigen Klebstoffzusammensetzungen lassen sich gut in Wasser redispergieren. Die Partikelgrößenverteilungen der eingesetzten Dispersionen und Redispersionen sind weitgehend identisch.

Gegenstand der Erfindung ist auch die Verwendung der pulverförmigen Klebstoffzusammensetzung nach Anspruch 1 in Formulierungen zum Verkleben von porösen und semiporösen Substraten.

Die Pulver eignen sich insbesondere in Fußbodenklebstoffen zum Verkleben von Fußbodenbelägen. Weiterhin sind Verklebungen von Papier, Pappe, Polystyrolschaum, Filz, Leder oder Holz möglich. Als zusätzliches Einsatzgebiet sind Kaschier- und Etikettierkleber zu erwähnen.

Für die verschiedenen Verwendungen können noch übliche Zusatzstoffe, wie Füllstoffe, Verdickungsmittel, Verlaufsmittel zugesetzt werden. Die Einarbeitung dieser Stoffe kann bereits vor dem Versprühvorgang oder aber in die Rezeptur erfolgen.

Die folgenden Beispiele dienen der näheren Erläuterung der Erfindung. Die angegebenen Teile und Prozente beziehen sich auf das Gewicht, soweit nicht anders vermerkt.

### Beispiel 1

Es wurden folgende Zubereitungen hergestellt:
a)

| | |
|---|---|
| 370 Teile | eines Kolophoniumharz-Glykolesters |
| 130 Teile | eines Kolophoniumharz-Glycerinesters |
| 15 Teile | eines Ethylenoxid/Propylenoxid-Blockpolymerisats (20:80) mit einem Molekulargewicht von 2500 |
| 285 Teile | einer Emulgator stabilisierten Dispersion auf Basis Vinylacetat, Ethylen, Butylacrylat, Feststoffgehalt: 65 %, Viskosität (Brookfield, RVT, Spindel 3): 2000 mPa·s, Tg: -8 °C |
| 840 Teile | einer Polyvinylalkohollösung (Feststoffgehalt: 25 %, Viskosität einer 4%igen wäßrigen Lösung bei 20 °C: 4 mPa·s, Verseifungsgrad: 88 %, mittlerer Polymerisationsgrad: 630)- |
| 700 Teile | vollentsalztes Wasser |

b)

| | |
|---|---|
| 370 Teile | eines Kolophoniumharz-Glykolesters |
| 130 Teile | eines Kolophoniumharz-Glycerinesters |
| 15 Teile | eines Ethylenoxid/Propylenoxid-Blockpolymerisats (20:80) mit einem Molekulargewicht von 2500 |
| 285 Teile | einer Emulgator stabilisierten Dispersion auf Basis Vinylacetat, Ethylen, Butylacrylat, Feststoffgehalt: 65 %, Viskosität (Brookfield, RVT, Spindel 3): 2000 mPa.s, Tg: -8 °C |
| 1680 Teile | einer Polyvinylalkohollösung (Feststoffgehalt: 25 %, Viskosität einer 4%igen wäßrigen Lösung bei 20 °C: 4 mPa·s, Verseifungsgrad: 88 %, mittlerer Polymerisationsgrad: 630) |
| 950 Teile | vollentsalztes Wasser |

Die Zubereitungen wurden unter Zugabe einer Antibackmittelkombination aus Talk und Dolomitsprühgetrockwet (Sprühtrockner der Fa. Niro, Eingangstemperatur: 130°C, Ausgangstemperatur: 65°C, Durchsatz: 1 kg/Stunde). Der Antibackmittelgehatt betug 12 %.

Die isolierten Dispersionspulver (1a) und (1b) wurden in folgender Rezeptierung für einen pulverförmigen Fußbodenklebstoff eingesetzt:

| | |
|---|---|
| 160 Teile | Dispersionspulver (1a) bzw. (1b) |
| 40 Teile | Leichtspat |
| 12 Teile | Stärke (^{®}Emcol, Emsland-Stärke GmbH) |
| 20 Teile | Zucker |

Die jeweilige Pulvermischung wurde unter Rühren in 200 Teile Wasser eingebracht und 5 Minuten gerührt. Nach einer Standzeit von 20 Minuten wurde nochmals 5 Minuten kräftig durchgerührt, die Klebstoffe sind danach gebrauchsfertig.

Es resultieren gut zu verarbeitende Klebstoffe, die einen Feststoffgehalt von 53 % und eine Viskosität von 23.000 (1a) bzw. 26.000 mPa·s (1b) Brookfield Spindel 7/20 Upm zeigen. Die Einlegezeit, bzw. offene Zeit der Klebstoffe, liegt bei 60 Minuten. Gemäß DIN 53269 wurden Verklebungen mit einem Teppichboden mit Doppelrücken (schwer zu verklebendes Material) und einem Nadelfilz durchgeführt. Um das Verhalten des Klebstoffs auch bei Temperaturen >50 °C zu prüfen, wurden abweichend von der Norm DIN 53269 auch Prüfkörper bei 70 °C gelagert (Norm schreibt nur 23 °C und 50 °C vor).

Die resultierenden Verklebungsfestigkeiten bei Lagertemperaturen von 23°C, 50 °C und 70°C sind in der folgenden Tabelle zusammengestellt:

| Beispiel Nr. | Belag | Schälwiderstand [N/cm] | | |
|---|---|---|---|---|
| | | 23 °C | 50 °C | 70 °C |
| 1a) | Teppich | 7 | 5 | 9 |
| 1b) | Teppich | 7 | 7 | 9 |
| 1a) | Nadelfilz | 11 | 12 | 16 |
| 1b) | Nadelfilz | 15 | 17 | 18 |

### Beispiel 2

Es wurden Zubereitungen wie in Beispiel (1 a) beschrieben hergestellt und sprühgetrocknet, wobei folgende Antibackmittel in einer Menge von 20 % eingesetzt wurden:
(2a): Kombination aus Talk und Dolomit
(2b) sprühgetrocknete Kieselsäure
(2c) Leichtspat

Die isolierten Dispersionspulver wurden in folgender Klebstoffrezeptur eingesetzt:

| | |
|---|---|
| 100 Teile | Dispersionspulver (2a), (2b) bzw. (2c) |
| 40 Teile | Leichtspat |
| 12 Teile | Stärke (Emcol UK-N) |
| 20 Teile | Zucker |

Obige Pulvermischungen wurden wie in Beispiel 1 beschrieben in 200 Teile Wasser eingebracht. Es wurden mit Nadelfilz und Teppichboden folgende Schälfestigkeiten ermittelt:

| Beispiel Nr. | Belag | Schälwiderstand [N/cm] | | |
|---|---|---|---|---|
| | | 23 °C | 50 °C | 70 °C |
| 2a) | Teppich | 6 | 7 | 7 |
| 2b) | Teppich | 7 | 7 | 6 |
| 2c) | Teppich | 7 | 7 | 7 |
| 2a) | Nadelfilz | 10 | 13 | 11 |
| 2b) | Nadelfilz | 12 | 12 | 13 |
| 2c) | Nadelfilz | 12 | 13 | 14 |

### Beispiel 3

Es wurde folgende Grundmischung hergestellt:

| | |
|---|---|
| 370 Teile | eines Kolophoniumharz-Glykolesters |
| 130 Teile | eines Kolophoniumharz-Glycerinesters |
| 15 Teile | eines Ethylenoxid/Propylenoxid-Blockpolymerisats (20:80) mit einem Molekulargewicht von 2500 |
| 285 Teile | einer Emulgator stabilisierten Dispersion auf Basis Vinylacetat, Ethylen, Butylacrylat, Feststoffgehalt: 65 %, Viskosität (Brookfield, RVT, Spindel 3): 2000 mPa·s, Tg: -8 °C |
| 1200 Teile | einer Polyvinylalkohollösung (Feststoffgehalt: 25 %, Viskosität einer 4%igen wäßrigen Lösung bei 20 °C: 4 mPa·s, Verseifungsgrad: 88 %, mittlerer Polymerisationsgrad: 630) |
| 900 Teile | vollentsalztes Wasser |

Zu der Mischung wurden folgende Dispersionen zugesetzt:
(3a)

| | |
|---|---|
| 600 Teile | einer Schutzkolloid stabilisierten Dispersion auf Basis Vinylacetat, Ethylen, Feststoffgehalt: 50 %, Tg: +17°C |

(3b)

| | |
|---|---|
| 1600 Teile | einer Schutzkolloid stabilisierten Dispersion auf Basis Vinylacetat, Versaticsäure-10-vinylester, Feststoffgehalt: 50 %, Tg: +33 °C |

(3c)

| | |
|---|---|
| 600 Teile | einer Schutzkolloid stabilisierten Dispersion auf Basis Methylmethacrylat, Butylacrylat, Feststoffgehalt: 50 %, Tg: -5 °C |

(3d)

| | |
|---|---|
| 600 Teile einer | Emulgator stabilisierten Dispersion auf Basis Butylacrylat, Styrol, Feststoffgehalt: 50 %; Tg: +17°C |

Die Abmischungen wurden unter Zugabe der in Beispiel 1 erwähnten Antibackmittelkombination versprüht, der Antibackmittelgehalt wurde auf 20 % eingestellt.

Die Pulver wurden in die in Beispiel 2 angegebene Rezeptierung für einen pulverförmigen Fußbodenklebstoff eingebracht. Die durch Versetzen mit Wasser hergestellten Kleber wurden bezüglichverklebungsfestigkeiten untersucht. Die folgende Tabelle zeigt die Ergebnisse:

| Beispiel Nr. | Belag | Schälwiderstand [N/cm] | | |
|---|---|---|---|---|
| | | 23 °C | 50 °C | 70°C |
| 3a) | Teppich | 5 | 6 | 8 |
| 3b) | Teppich | 6 | 7 | 9 |
| 3c) | Teppich | 8 | 9 | 9 |
| 3d) | Teppich | 6 | 7 | 9 |
| 3a) | Nadelfilz | 10 | 12 | 12 |
| 3b) | Nadelfilz | 14 | 14 | 14 |
| 3c) | Nadelfilz | 15 | 16 | 16 |
| 3d) | Nadelfilz | 12 | 14 | 15 |

### Beispiel 4

Es wurde die Grundmischung analog Beispiel 3 hergestellt, jedoch wurden anstelle der dort beschriebenen Dispersion folgende Dispersionen eingesetzt:
(4a)

| | |
|---|---|
| 335 Teile | einer Emulgator stabilisierten Dispersion auf Basis Vinylacetat, Ethylen, 2-Ethylhexylacrylat, Feststoffgehalt: 55 %, Viskosität (Brookfield, RVT, Spindel 3): 1800 mPa·s, Tg: -15°C |

(4b)

| | |
|---|---|
| 335 Teile | einer Emulgator stabilisierten Dispersion auf Basis Vinylacetat, Versaticsäure-10-vinylester, Ethylen, Feststoffgehalt: 55 %, Viskosität (Brookfield, RVT, Spindel 3): 1900 mPa·s, Tg: -10 °C |

Zu den Mischungen wurden jeweils

| | |
|---|---|
| 600 Teile | einer Schutzkolloid stabilisierten Dispersion auf Basis Vinylacetat, Ethylen, Feststoffgehalt: 50 %, Tg: +17°C |

hinzugefügt.

Die Abmischungen wurden unter Einsatz von Kieselsäure als Antibackmittel sprühgetrocknet. Der Antibackmittelgehalt betrug 20 %.

Die isolierten Dispersionspulver wurden in der in Beispiel (2) angegebenen Klebstoffrezeptur eingesetzt. Es resultieren gut zu verarbeitende Klebstoffe mit folgenden Verklebungsfestigkeiten:

| Beispiel | Nr. Belag | Schälwiderstand [N/cm] | | |
|---|---|---|---|---|
| | | 23 °C | 50 °C | 70 °C |
| 4a) | Teppich | 8 | 7 | 8 |
| 4b) | Teppich | 9 | 8 | 8 |
| 4a) | Nadelfilz | 11 | 13 | 12 |
| 4b) | Nadelfilz | 15 | 14 | 14 |

### Beispiel 5

Es wurden Fußbodenklebstoffe analog Beispiel 3 hergestellt, wobei folgende Rezepturen eingesetzt wurden:

| | |
|---|---|
| 370 Teile | eines Kolophoniumharz-Glykolesters |
| 130 Teile | eines Kolophoniumharz-Glycerinesters |
| 15 Teile | eines Ethylenoxid/Propylenoxid-Blockpolymerisats (20:80) mit einem Molekulargewicht von 2500 |
| 285 Teile | einer Emulgator stabilisierten Dispersion auf Basis Vinylacetat. Ethylen, Butylacrylat, Feststoffgehalt: 65 %, Viskosität (Brookfield, RVT. Spindel 3): 2000 mPa·s), Tg: -8 °C |
| 1240 Teile | einer Polyvinylalkohollösung (Feststoffgehalt: 25 %, Viskosität einer 4%igen wäßrigen Lösung bei 20 °C: 4 mPa·s, Verseifungsgrad: 88 %, mittlerer Polymerisationsgrad: 630) |
| 625 Teile | vollentsalztes Wasser- |

Zugesetzte Dispersionen:
(5a)

| | |
|---|---|
| 155 Teile | einer Schutzkolloid stabilisierten Dispersion auf Basis Vinylacetat, Ethylen, Feststoffgehalt: 50 %, Tg: +17°C |

(5b)

| | |
|---|---|
| 155 Teile | einer Schutzkolloid stabilisierten Dispersion auf Basis Vinylacetat, Versaticsäure-10-vinylester, Feststoffgehalt: 50 %, Tg: +33 °C |

(5c)

| | |
|---|---|
| 155 Teile | einer Schutzkolloid stabilisierten Dispersion auf Basis Vinylacetat, Versaticsäure-10-vinylester, Feststoffgehalt: 50 %, Tg: +25 °C |

Als Antibackmittel wurde die in Beispiel (2b) erwähnte sprühgetrocknete Kieselsäure eingesetzt (20 %).

Die anwendungstechnischen Prüfergebnisse sind der folgenden Tabelle zu entnehmen:

| Beispiel Nr. | Belag | Schälwiderstand [N/cm] | | |
|---|---|---|---|---|
| | | 23 °C | 50 °C | 70 °C |
| 5a) | Teppich | 5 | 5 | 4 |
| 5b) | Teppich | 3 | 4 | 5 |
| 5c) | Teppich | 4 | 5 | 5 |
| 5a) | Nadelfilz | 8 | 9 | 9 |
| 5b) | Nadelfilz | 6 | 8 | 10 |
| 5c) | Nadelfilz | 7 | 6 | 7 |

### Beispiel 6

Es wurde eine Zubereitung wie in Beispiel (1 b) hergestellt, jedoch wurden anstelle der Polyvinylalkohollösung 1680 Teile einer 25%igen Dextrin-Lösung (^{®}Avedex 36 LAC 14, Fa. AVEBE) eingesetzt.

Die Zubereitung wurde wie in Beispiel 1 versprüht, und in der dort angegebenen Rezeptierung für einen pulverförmigen Teppichklebstoff eingesetzt. Auch in diesem Falle wurden ausreichende Verklebungsfestigkeiten erhalten.

## Patentansprüche (Patentansprüche für folgende(n) Vertragsstaat(en): AT, BE, CH, DE, ES, FR, GB, IT, LI, NL, SE, FI)

1. Pulverförmige in Wasser redispergierbare Klebstoffzusammensetzung, enthaltend
(a) mindestens ein Polymerisat aus der Gruppe der Vinylester-Polymerisate, (Meth)acrylat Polymerisate und Styrol-(Meth)acrylat-Polymerisate,
(b) mindestens ein klebrigmachendes Harz
(c) ein oder mehrere Schutzkolloide in einer Menge von 5 bis 50 Gew.-%,
wobei als Schutzkolloide Verbindungen ausgewählt aus der Gruppe der wasserlöslichen, niedermolekularen, nicht-neutralisierten Homo- oder Co-Polymerisate von olefinisch ungesättigten Mono- oder Dicarbonsäuren oder deren Anhydriden, oder teilneutralisierte Homopolymerisate von olefinisch ungesättigten Mono- oder Dicarbonsäuren oder deren Anhydriden, oder teilneutralisierte Copolymerisate von olefinisch ungesättigten Mono- oder Dicarbonsäuren oder deren Anhydriden mit einem Säuregehalt von > 80 Mol% bei Copolymeren mit C₃- bis C₁₂-Alkenen oder Styrol und einem Säuregehalt von 50 bis 99 Mol% bei den übrigen Copolymeren, die in einer Menge zwischen 2 und 40 Gew% bezogen auf das Polymerisat enthalten sind,
oder wobei als Schutzkolloide ein oder mehrere Verbindungen ausgewählt aus der Gruppe der wasserlöslichen, niedermolekularen Homo- oder Co-Polymerisate von olefinisch ungesättigten Mono- oder Dicarbonsäuren oder deren Anhydriden, welche als Copolymerisate noch 2 bis 50 Mol% weiterer radikalisch polymerisierbarer Monomere enthalten, und der Phenolsulfonsäure-, Melaminsulfonsäure-, Naphthalinsulfonsäurekondensate, die in einer Menge von 2 bis 50 Gew%, bezogen auf die Gesamttrockenmasse des klebrigmachenden Harzes enthalten sind,
ausgeschlossen sind, und gegebenenfalls
(d) ein oder mehrere Antibackmittel.

2. Pulverförmige Klebstoffzusammensetzung nach Anspruch 1, **dadurch gekennzeichnet, daß** das Polymerisat (a) ein Vinylacetat-Homo- oder ―Copolymer ist.

3. Pulverförmige Klebstoffzusammensetzung nach Anspruch 1, **dadurch gekennzeichnet, daß** das Harz (b) aus der Gruppe der Kolophoniumharze und Kohlenwasserstoffharze ausgewählt ist.

4. Pulverförmige Klebstoffzusammensetzung nach Anspruch 1, **dadurch gekennzeichnet, daß** das Harz (b) ein Kolophoniumharz ist, das mit mehrwertigem Alkohol aus der Gruppe Ethylenglykol, Glycerin und Pentaerythrit verestert ist.

5. Pulverförmige Klebstoffzusammensetzung nach Anspruch 1, **dadurch gekennzeichnet, daß** der Anteil des Harzes (b) 50 bis 300 Gew.-%, bezogen auf das Polymerisat (a), beträgt.

6. Pulverförmige Klebstoffzusammensetzung nach Anspruch 1, **dadurch gekennzeichnet, daß** ein Schutzkolloid (c) in einer Menge von 10 bis 40 Gew.-%, bezogen auf die Gesamtmenge aus Polymerisat (a) und Harz (b), enthalten ist.

7. Pulverförmige Klebstoffzusammensetzung nach Anspruch 1, **dadurch gekennzeichnet, daß** ein Antibackmittel (d) in einer Menge von 5 bis 25 Gew.-%, bezogen auf die Gesamtmenge an Feststoff, enthalten ist.

8. Verfahren zur Herstellung der pulverförmige Klebstoffzusammensetzung nach Anspruch 1 durch Trocknen der zugrunde liegenden Dispersion aus Polymerisat (a), klebrigmachendem Harz (b), Schutzkolloid (c) und gegebenenfalls Antibackmittel (d).

9. Verwendung der pulverförmige Klebstoffzusammensetzung nach Anspruch 1 in Formulierungen zum Verkleben von porösen und semiporösen Substraten.

10. Verwendung der pulverförmige Klebstoffzusammensetzung nach Anspruch 1 in Formulierungen zum Verkleben von Fußbodenbelägen.

## Patentansprüche (Patentansprüche für folgende(n) Vertragsstaat(en): DK, GR, IE, PT)

1. Pulverförmige in Wasser redispergierbare Klebstoffzusammensetzung, enthaltend
(a) mindestens ein Polymerisat aus der Gruppe der Vinylester-Polymerisate, (Meth)acrylat Polymerisate und Styrol-(Meth)acrylat-Polymerisate,
(b) mindestens ein klebrigmachendes Harz
(c) ein oder mehrere Schutzkolloide in einer Menge von 5 bis 50 Gew.-%,
wobei als Schutzkolloide ein oder mehrere Verbindungen ausgewählt aus der Gruppe der wasserlöslichen, niedermolekularen Homo- oder Co-Polymerisate von olefinisch ungesättigten Mono- oder Dicarbonsäuren oder deren Anhydriden, welche als Copolymerisate noch 2 bis 50 Mol% weiterer radikalisch polymerisierbarer Monomere enthalten, und der Phenolsulfonsäure-, Melaminsulfonsäure-, Naphthalinsulfonsäurekondensate, die in einer Menge von 2 bis 50 Gew%, bezogen auf die Gesamttrockenmasse des klebrigmachenden Harzes enthalten sind,
ausgeschlossen sind, und gegebenenfalls
(d) ein oder mehrere Antibackmittel.

2. Pulverförmige Klebstoffzusammensetzung nach Anspruch 1, **dadurch gekennzeichnet, daß** das Polymerisat (a) ein Vinylacetat-Homo- oder -Copolymer ist.

3. Pulverförmige Klebstoffzusammensetzung nach Anspruch 1, **dadurch gekennzeichnet, daß** das Harz (b) aus der Gruppe der Kolophoniumharze und Kohlenwasserstoffharze ausgewählt ist.

4. Pulverförmige Klebstoffzusammensetzung nach Anspruch 1, **dadurch gekennzeichnet, daß** das Harz (b) ein Kolophoniumharz ist, das mit mehrwertigem Alkohol aus der Gruppe Ethylenglykol, Glycerin und Pentaerythrit verestert ist.

5. Pulverförmige Klebstoffzusammensetzung nach Anspruch 1, **dadurch gekennzeichnet, daß** der Anteil des Harzes (b) 50 bis 300 Gew.-%, bezogen auf das Polymerisat (a), beträgt.

6. Pulverförmige Klebstoffzusammensetzung nach Anspruch 1, **dadurch gekennzeichnet, daß** ein Schutzkolloid (c) in einer Menge von 10 bis 40 Gew.-%, bezogen auf die Gesamtmenge aus Polymerisat (a) und Harz (b), enthalten ist.

7. Pulverförmige Klebstoffzusammensetzung nach Anspruch 1, **dadurch gekennzeichnet, daß** ein Antibackmittel (d) in einer Menge von 5 bis 25 Gew.-%, bezogen auf die Gesamtmenge an Feststoff, enthalten ist.

8. Verfahren zur Herstellung der pulverförmige Klebstoffzusammensetzung nach Anspruch 1 durch Trocknen der zugrunde liegenden Dispersion aus Polymerisat (a), klebrigmachendem Harz (b), Schutzkolloid (c) und gegebenenfalls Antibackmittel (d).

9. Verwendung der pulverförmige Klebstoffzusammensetzung nach Anspruch 1 in Formulierungen zum Verkleben von porösen und semiporösen Substraten.

10. Verwendung der pulverförmige Klebstoffzusammensetzung nach Anspruch 1 in Formulierungen zum Verkleben von Fußbodenbelägen.

## Claims (Claims for the following Contracting State(s): AT, BE, CH, DE, ES, FR, GB, IT, LI, NL, SE, FI)

1. Pulverulent adhesive composition which is redispersible in water, comprising
(a) at least one polymer from the group consisting of vinyl ester polymers, (meth)acrylate polymers and styrene(meth)acrylate polymers,
(b) at least one tackifying resin,
(c) one or more protective colloids in an amount from 5 to 50% by weight,
with the exclusion as protective colloids of compounds selected from the group consisting of water-soluble, low molecular mass, non-neutralized homopolymers or copolymers of olefinically unsaturated monocarboxylic or dicarboxylic acids or their anhydrides, or partially neutralized homopolymers of olefinically unsaturated monocarboxylic or dicarboxylic acids or their anhydrides, or partially neutralized copolymers of olefinically unsaturated monocarboxylic or dicarboxylic acids or their anhydrides with an acid content of > 80 mol% in the case of copolymers with C₃ to C₁₂ alkenes or styrene and an acid content of 50 to 99 mol% in the case of the other copolymers, which are present in an amount between 2% and 40% by weight, based on the polymer,
or with the exclusion as protective colloids of one or more compounds selected from the group consisting of water-soluble, low molecular mass homopolymers or copolymers of olefinically unsaturated monocarboxylic or dicarboxylic acids or their anhydrides, containing as copolymers additionally 2 to 50 mol% of further free-radically polymerizable monomers, and of phenolsulphonic acid condensates, melamine sulphonic acid condensates and naphthalene sulphonic acid condensates, which are present in an amount of 2% to 50% by weight, based on the total dry mass of the tackifying resin,
and, if desired,
(d) one or more anticaking agents.

2. Pulverulent adhesive composition according to Claim 1, **characterized in that** the polymer (a) is a vinyl acetate homopolymer or vinyl acetate copolymer.

3. Pulverulent adhesive composition according to Claim 1, **characterized in that** the resin (b) is selected from the group consisting of rosins and hydrocarbon resins.

4. Pulverulent adhesive composition according to Claim 1, **characterized in that** the resin (b) is a rosin which is esterified with polyhydric alcohol from the group consisting of ethylene glycol, glycerol and pentaerythritol.

5. Pulverulent adhesive composition according to Claim 1, **characterized in that** the proportion of the resin (b) is from 50% to 300% by weight, based on the polymer (a).

6. Pulverulent adhesive composition according to Claim 1, **characterized in that** it comprises a protective colloid (c) in an amount from 10% to 40% by weight, based on the overall amount of polymer (a) and resin (b).

7. Pulverulent adhesive composition according to Claim 1, **characterized in that** it comprises an anticaking agent (d) in an amount of from 5% to 25% by weight, based on the overall amount of solids.

8. Process for preparing the pulverulent adhesive composition according to Claim 1 by drying the dispersion on which it is based comprising polymer (a), tackifier resin (b), protective colloid (c) and, if desired, anticaking agent (d).

9. Use of the pulverulent adhesive composition according to Claim 1 in formulations for the adhesive bonding of porous and semiporous substrates.

10. Use of the pulverulent adhesive composition according to Claim 1 for the adhesive bonding of floor coverings.

## Claims (Claims for the following Contracting State(s): DK, GR, IE, PT)

1. Pulverulent adhesive composition which is redispersible in water, comprising
(a) at least one polymer from the group consisting of vinyl ester polymers, (meth)acrylate polymers and styrene(meth)acrylate polymers,
(b) at least one tackifying resin,
(c) one or more protective colloids in an amount from 5 to 50% by weight,
with the exclusion as protective colloids of one or more compounds selected from the group consisting of water-soluble, low molecular mass homopolymers or copolymers of olefinically unsaturated monocarboxylic or dicarboxylic acids or their anhydrides, containing as copolymers additionally 2 to 50 mol% of further free-radically polymerizable monomers, and of phenolsulphonic acid condensates, melamine sulphonic acid condensates and naphthalene sulphonic acid condensates, which are present in an amount of 2% to 50% by weight, based on the total dry mass of the tackifying resin,
and, if desired,
(d) one or more anticaking agents.

2. Pulverulent adhesive composition according to Claim 1, **characterized in that** the polymer (a) is a vinyl acetate homopolymer or vinyl acetate copolymer.

3. Pulverulent adhesive composition according to Claim 1, **characterized in that** the resin (b) is selected from the group consisting of rosins and hydrocarbon resins.

4. Pulverulent adhesive composition according to Claim 1, **characterized in that** the resin (b) is a rosin which is esterified with polyhydric alcohol from the group consisting of ethylene glycol, glycerol and pentaerythritol.

5. Pulverulent adhesive composition according to Claim 1, **characterized in that** the proportion of the resin (b) is from 50% to 300% by weight, based on the polymer (a).

6. Pulverulent adhesive composition according to Claim 1, **characterized in that** it comprises a protective colloid (c) in an amount from 10% to 40% by weight, based on the overall amount of polymer (a) and resin (b).

7. Pulverulent adhesive composition according to Claim 1, **characterized in that** it comprises an anticaking agent (d) in an amount of from 5% to 25% by weight, based on the overall amount of solids.

8. Process for preparing the pulverulent adhesive composition according to Claim 1 by drying the dispersion on which it is based comprising polymer (a), tackifier resin (b), protective colloid (c) and, if desired, anticaking agent (d).

9. Use of the pulverulent adhesive composition according to Claim 1 in formulations for the adhesive bonding of porous and semiporous substrates.

10. Use of the pulverulent adhesive composition according to Claim 1 for the adhesive bonding of floor coverings.

## Revendications (Revendications pour l'(les) Etat(s) contractant(s) suivant(s): AT, BE, CH, DE, ES, FR, GB, IT, LI, NL, SE, FI)

1. Composition de colle pulvérulente redispersable dans l'eau contenant
(a) au moins un polymère pris dans le groupe des polymères d'esters vinyliques, des polymères de (méth)acrylate et des polymères de styrène-(méth)acrylate,
(b) au moins une résine tackifiante,
(c) un ou plusieurs colloïdes protecteurs en une quantité de 5 à 50 % en masse,
un ou plusieurs composés pris dans le groupe des homo- et copolymères non neutralisés, de bas poids moléculaire, hydrosolubles, d'acides mono- et dicarboxyliques à insaturation oléfinique ou de leurs anhydrides, ou des homopolymères partiellement neutralisés d'acides mono- et dicarboxyliques à insaturation oléfinique ou de leurs anhydrides, ou des copolymères partiellement neutralisés d'acides mono- ou dicarboxyliques à insaturation oléfinique ou de leurs anhydrides, présentant une teneur en acide >80 % molaires dans le cas des copolymères avec des alcènes en C₃-C₁₂ ou le styrène, et une teneur en acide de 50 à 99 % molaires dans le cas des autres copolymères, qui sont contenus en une quantité comprise entre 2 et 40 % en masse par rapport au polymère, utilisés en tant que colloïdes protecteurs,
un ou plusieurs composés pris dans le groupe des homo- et copolymères de bas poids moléculaire, hydrosolubles, d'acides mono- et dicarboxyliques à insaturation oléfinique ou de leurs anhydrides, qui contiennent encore en tant que copolymères de 2 à 50 % en masse d'autres monomères polymérisables par voie radicalaire, et des condensats de l'acide phénolsulfonique, de l'acide mélaminesulfonique, de l'acide naphtalènesulfonique, qui sont contenus en une concentration de 2 à 50 % en masse, par rapport à la masse totale sèche de la résine tackifiante, utilisés en tant que colloïdes protecteurs, utilisés en tant que colloïdes protecteurs,
étant exclus, et éventuellement
(d) un ou plusieurs agents anti-agglomérants.

2. Composition de colle pulvérulente selon la revendication 1, **caractérisée en ce que** le polymère (a) est un homo- ou copolymère d'acétate de vinyle.

3. Composition de colle pulvérulente selon la revendication 1, **caractérisée en ce que** la résine (b) est prise dans le groupe des résines de colophane et des résines d'hydrocarbures.

4. Composition de colle pulvérulente selon la revendication 1, **caractérisée en ce que** la résine (b) est une résine de colophane, qui est estérifiée avec un alcool multifonctionnel pris dans le groupe comprenant l'éthylèneglycol, la glycérine et le pentaérythritol.

5. Composition de colle pulvérulente selon la revendication 1, **caractérisée en ce que** le taux de la résine (b) est de 50 à 300 % en masse, par rapport au polymère (a).

6. Composition de colle pulvérulente selon la revendication 1, **caractérisée en ce que** le colloïde protecteur (c) est contenu en une quantité de 10 à 40 % en masse, par rapport à la masse totale du polymère (a) et de la résine (b).

7. Composition de colle pulvérulente selon la revendication 1, **caractérisée en ce que** l'agent anti-agglomérant (d) est contenue en une quantité de 5 à 25 % en masse par rapport à la quantité totale de matière solide.

8. Procédé pour la préparation de la composition de colle pulvérulente selon la revendication 1 par séchage de la dispersion de base du polymère (a), de la résine tackifiante (b), du colloïde protecteur (c) et éventuellement de l'agent anti-agglomérant (d).

9. Utilisation de la composition de colle pulvérulente selon la revendication 1 dans des formulations pour le collage de substrats poreux et semi-poreux.

10. Utilisation de la composition de colle pulvérulente selon la revendication 1 dans des formulations pour le collage de revêtements de sols.

## Revendications (Revendications pour l'(les) Etat(s) contractant(s) suivant(s): DK, GR, IE, PT)

1. Composition de colle pulvérulente redispersable dans l'eau contenant
(a) au moins un polymère pris dans le groupe des polymères d'esters vinyliques, des polymères de (méth)acrylate et des polymères de styrène-(méth)acrylate,
(b) au moins une résine tackifiante,
(c) un ou plusieurs colloïdes protecteurs en une quantité de 5 à 50 % en masse,
un ou plusieurs composés pris dans le groupe des homo- et copolymères de bas poids moléculaire, hydrosolubles, d'acides mono- et dicarboxyliques à insaturation oléfinique ou de leurs anhydrides, qui contiennent encore en tant que copolymères de 2 à 50 % molaires d'autres monomères polymérisables par voie radicalaire, et des condensats de l'acide phénolsulfonique, de l'acide mélaminesulfonique, de l'acide naphtalènesulfonique, qui sont contenus en une concentration de 2 à 50 % en masse, par rapport à la masse totale sèche de la résine tackifiante, utilisés en tant que colloïdes protecteurs,
étant exclus, et éventuellement
(d) un ou plusieurs agents anti-agglomérants.

2. Composition de colle pulvérulente selon la revendication 1, **caractérisée en ce que** le polymère (a) est un homo- ou copolymère d'acétate de vinyle.

3. Composition de colle pulvérulente selon la revendication 1, **caractérisée en ce que** la résine (b) est prise dans le groupe des résines de colophane et des résines d'hydrocarbures.

4. Composition de colle pulvérulente selon la revendication 1, **caractérisée en ce que** la résine (b) est une résine de colophane, qui est estérifiée avec un alcool multifonctionnel pris dans le groupe comprenant l'éthylèneglycol, la glycérine et le pentaérythritol.

5. Composition de colle pulvérulente selon la revendication 1, **caractérisée en ce que** le taux de la résine (b) est de 50 à 300 % en masse, par rapport au polymère (a).

6. Composition de colle pulvérulente selon la revendication 1, **caractérisée en ce que** le colloïde protecteur (c) est contenu en une quantité de 10 à 40 % en masse, par rapport à la masse totale du polymère (a) et de la résine (b).

7. Composition de colle pulvérulente selon la revendication 1, **caractérisée en ce que** l'agent anti-agglomérant (d) est contenu en une quantité de 5 à 25 % en masse par rapport à la quantité totale de matière solide.

8. Procédé pour la préparation de la composition de colle pulvérulente selon la revendication 1 par séchage de la dispersion de base du polymère (a), de la résine tackifiante (b), du colloïde protecteur (c) et éventuellement de l'agent anti-agglomérant (d).

9. Utilisation de la composition de colle pulvérulente selon la revendication 1 dans des formulations pour le collage de substrats poreux et semi-poreux.

10. Utilisation de la composition de colle pulvérulente selon la revendication 1 dans des formulations pour le collage de revêtements de sols.
